# EUROPÄISCHE PATENTSCHRIFT

(11) **EP 0 542 026 B1**
(45) Veröffentlichungstag und Bekanntmachung des Hinweises auf die Patenterteilung: **14.08.1996**
(21) Anmeldenummer: 92118319.0
(22) Anmeldetag: 27.10.1992
(51) Int. Cl.: B23D 37/00

(54) **Verfahren zur spanenden Bearbeitung rotationssymmetrischer Werkstückflächen, insbesondere von Kurbelwellen, sowie Werkzeug zur Durchführung eines solchen Verfahrens**
Process for machining rotationally symmetrical surfaces, especially crankshafts, as well as tool for carrying out such a process
Procédé d'usinage de surface à symétrie de rotation, en particulier vilebrequin, ainsi que outil pour la réalisation d'un tel procédé

(30) Priorität: 30.10.1991 DE 4135681
(43) Veröffentlichungstag der Anmeldung: 19.05.1993
(73) Patentinhaber: Gebr. Heller Maschinenfabrik GmbH, D-72622 Nürtingen (DE)
(72) Erfinder:
(74) Vertreter: Kohl, Karl-Heinz

(56) Entgegenhaltungen:
- EP-A- 0 134 383
- WERKSTATT UND BETRIEB Bd. 123, Nr. 12, 1. Dezember 1990, MUNCHEN Seiten 915 - 920 AUSTEN & SCHMID 'drehen-drehr umen- ein neues verfahren zum fertigen von kurbel und nockenwellen'

## Beschreibung

Die Erfindung betrifft ein Verfahren zur spanenden Bearbeitung rotationssymmetrischer Werkstückflächen nach dem Oberbegriff des Anspruches 1 bzw. 6 sowie ein Werkzeug zur Durchführung eines solchen Verfahrens nach dem Oberbegriff des Anspruches 9.

Bei der Bearbeitung von Kurbelwellen ist es bekannt (EP-A 0 211 216, DE-C 35 23 274), zunächst eine Grobbearbeitung der Kurbelwelle durch radiales Einstechen mit Profilmeißeln durchzuführen. Im Anschluß an diese Grobdrehbearbeitung wird die Schlichtbearbeitung der Kurbelwelle durch Drehräumen vorgenommen, bei dem die Kurbelwelle relativ schnell rotiert, während das Werkzeug mit verhältnismäßig geringer Geschwindigkeit gedreht wird. Für jede Breite eines Kurbelwellenzapfens müssen Sonderschneiden für den Schlichtdrehräumvorgang verwendet werden, da die Schneidkanten unter einem Winkel zur Drehachse des Werkzeuges verlaufen und zusätzlich bombiert ausgebildet sein müssen. Beim Drehräumen dringen die Schlichtschneiden unter einem sehr großen negativen Winkel in die rotationssymmetrische Werkstückfläche ein, wodurch sehr hohe Normalkräfte entstehen. Dies führt zu einem verstärkten Schneidenverschleiß der Schlichtschneide und zu einem verstärkten Ausbiegen der Kurbelwelle während des Drehräumvorganges. Als Folge hiervon tritt beim Schlichtdrehräumen in hohem Maße eine Ratterneigung auf, die auch zu Genauigkeitseinbußen führt. Bei der Stahlbearbeitung im Drehräumverfahren werden außerdem lange Wirrspäne erzeugt, die einen einwandfreien Spänefluß im Werkzeug und in der Maschine nicht mehr gewährleisten. Insbesondere bei automatisch arbeitenden Maschinen ist die Abfuhr dieser langen Wirrspäne schwierig und aufwendig. Diese Wirrspäne sind zudem bei Aufmaßschwankungen sehr unterschiedlich.

Es ist auch ein Gewindeschneidwerkzeug bekannt (EP-A-0 145 167), mit dem Innen- und Außengewinde an Werkstücken hergestellt werden. Das Gewindeschneidwerkzeug hat eine Schneidplatte mit einzelnen Schneiden, die nebeneinander angeordnet sind. Mit ihnen werden die Gewindegänge auf der Innen- bzw. Außenfläche des Werkstückes gefertigt.

Der Erfindung liegt die Aufgabe zugrunde, das gattungsgemäße Verfahren und das gattungsgemäße Werkzeug so auszubilden, daß die rotationssymmetrische Werkstückfläche bei der Schlichtbearbeitung so bearbeitet werden kann, daß bei niedrigen Schneidstoffkosten und einer einwandfreien Späneabfuhr eine hohe Genauigkeit an der Werkstückfläche erreicht wird und nur geringe Schnittkräfte entstehen.

Diese Aufgabe wird beim gattungsgemäßen Verfahren erfindungsgemäß mit den kennzeichnenden Merkmalen des Anspruches 1 bzw. 6 und beim gattungsgemäßen Werkzeug erfindungsgemäß mit den kennzeichnenden Merkmalen des Anspruches 9 gelöst.

Beim erfindungsgemäßen Verfahren gemäß Anspruch 1 und 6 wird die Werkstückfläche bei der Schlichtbearbeitung im Längsdrehen bearbeitet. Dies hat den Vorteil, daß die Schneiden der Schneidplatte ihre Lage bezüglich der Werkstückfläche während der Schlichtbearbeitung nicht ändern und so angeordnet werden können, daß nur geringe Kräfte entstehen. Die Schneiden unterliegen darum nur einem geringen Verschleiß, und das Werkstück wird nur wenig ausgebogen. Dadurch wird eine Ratterneigung während der Schlichtbearbeitung vermieden, so daß eine hohe Bearbeitungsgenauigkeit erreicht wird. Die Schneidplatte mit der aufgeteilten Schneidenanordnung wird während des Längsdrehvorganges nur um kurze Axialwege hin- und herbewegt, wobei mit jeder Schneide, da sie nicht über die ganze axiale Länge der zu bearbeitenden rotationssymmetrischen Werkstückfläche bewegt werden muß, nur kurze Späne erzeugt werden. Sie lassen sich mühelos abführen. Wird der Längsdrehvorgang als abschließender Arbeitsschritt bei der Schlichtbearbeitung vorgenommen, kann das Werkstück wieder in seine Ausgangslage zurückfedern, so daß anschließend durch die Hin- und Herbewegung der Schneidplatte die Werkstückfläche durch die Schneiden auf Endmaß bearbeitet wird. Auf diese Weise wird eine sehr hohe Rundgenauigkeit der Werkstückfläche erreicht. Mit dem erfindungsgemäßen Verfahren und damit erfindungsgemäßen Werkzeug können insbesondere Kurbelwellen, aber auch Nockenwellen, Getriebewellen und andere rotationssymetrische Werkstückflächen im Schlichtdrehverfahren bearbeitet werden.

Weitere Merkmale der Erfindung ergeben sich aus den weiteren Ansprüchen, der Beschreibung und den Zeichnungen.

Die Erfindung wird an Hand eines in den Zeichnungen dargestellten Ausführungsbeispieles näher erläutert. Es zeigen
- Fig. 1: in Seitenansicht einen Teil eines erfindungsgemäßen Werkzeuges, das scheibenförmig ausgebildet ist,
- Fig. 2: eine Abwicklung der Schneidenanordnung auf dem Werkzeug gemäß Fig. 1,
- Fig. 3: in schematischer Darstellung die Bearbeitung eines Zapfens einer Kurbelwelle, der mit dem erfindungsgemäßen Werkzeug schlichtbearbeitet wird,
- Fig. 4: in schematischer Darstellung in einer Ansicht quer zur Achse des Zapfens einer Kurbelwelle das erfindungsgemäße Werkzeug in Eingriff mit der Kurbelwelle,
- Fig. 5: in einer Darstellung entsprechend Fig. 4 eine Zwischenstellung des erfindungsgemäßen Werkzeuges bei der Bearbeitung des Zapfens der Kurbelwelle.

Mit dem Werkzeug 1, das im dargestellten bevorzugten Ausführungsbeispiel scheibenförmig ausgebildet ist, können Kurbelwellen 2 geschruppt und geschlichtet werden. Die Schruppbearbeitung der Kurbelwelle wird durch Einstechdrehen und die Feinbearbeitung durch Längsdrehen durchgeführt.

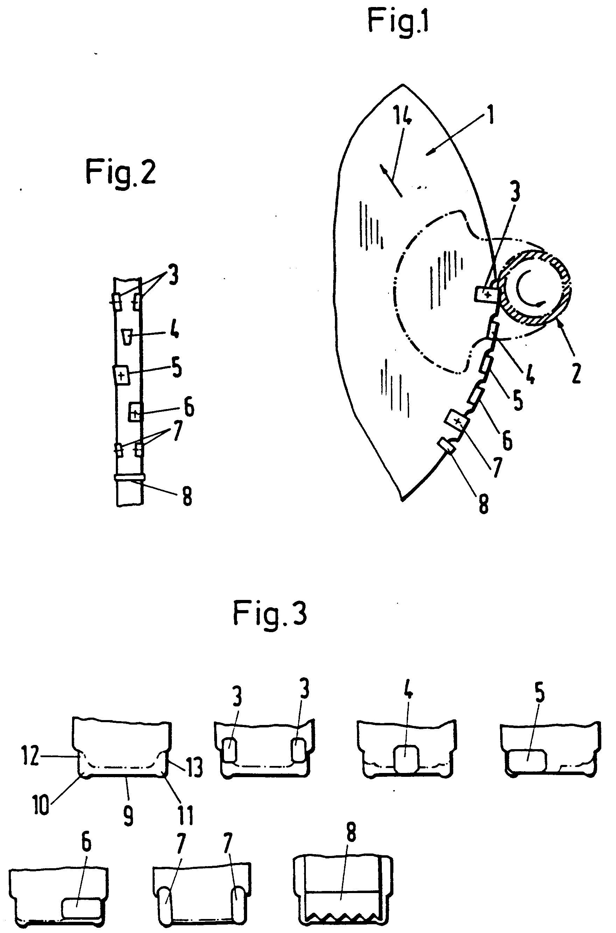

Die Fig. 1 und 2 zeigen beispielhaft einen Teil des Werkzeuges 1. Am Umfang ist es mit in Umfangsrichtung hintereinander liegenden Schneidplatten 3 bis 8 versehen, mit denen an der Kurbelwelle 2 unterschiedliche Bearbeitungen vorgenommen werden. Mit den Schneidplatten 3 bis 6 erfolgt die Schruppbearbeitung, während mit den Schneidplatten 7 und 8 geschlichtet wird. Die Schneidplatten 3 bis 8 bilden einen Schneidensatz. Am Umfang des scheibenförmigen Werkzeuges 1 sind mehrere solcher Schneidensätze vorgesehen, so daß das Werkzeug 1 eine lange Einsatzdauer hat.

Fig. 3 zeigt beispielhaft, wie mit den einzelnen Schneidplatten 3 bis 8 im Drehverfahren die Kurbelwelle 2 bearbeitet wird, die während der Bearbeitung um die jeweilige Achse der bearbeiteten zylindrischen Fläche gedreht wird. Von der Kurbelwelle 2 sind schematisch die Umfangsfläche eines Zapfens 9 sowie die daran anschließenden Ölbunde 12 und 13 dargestellt. In der linken oberen Darstellung der Fig. 3 ist mit der strichpunktierten Linie die Rohkontur des Kurbelwellenzapfens 9 dargestellt. Er wird im Einstechdrehverfahren so weit spanend bearbeitet, bis sich die durch die ausgezogene Linie in Fig. 3 angegebene Form ergibt. Zunächst werden mit den an den Seitenflächen des scheibenförmigen Werkzeuges 1 befindlichen Schneidplatten 3 die Enden 12, 13 des Kurbelzapfens 9 gedreht. Nach Beendigung dieser ersten Drehoperation wird das Werkzeug 1 radial zurückgefahren, in Pfeilrichtung 14 (Fig. 1) gedreht und wieder radial an die Kurbelwelle 2 herangefahren. Nunmehr wird mit der Schneidplatte 4 bei stehendem Werkzeug 1 und rotierender Kurbelwelle 2 der mittlere Bereich des Kurbelwellenzapfens 9 grob bearbeitet.

Nach Beendigung dieser zweiten Drehoperation wird das Werkzeug 1 wiederum radial von der Kurbelwelle 2 zurückgefahren, in Pfeilrichtung 14 gedreht und wieder an die Kurbelwelle 2 herangefahren. Auf diese Weise werden nacheinander die Schneidplatten 5 bis 7 zum Eingriff mit der Kurbelwelle 2 gebracht (Fig. 3). Mit den Schneidplatten 5 und 6 wird der Kurbelwellenzapfen 9 über seine gesamte Länge nahezu auf den Enddurchmesser grob abgedreht.

In einer nächsten Drehoperation werden die Schneidenplatten 7 in Eingriff mit der Kurbelwelle 2 gebracht. Sie befinden sich einander gegenüberliegend oder versetzt an den Seitenflächen des scheibenförmigen Werkzeuges 1 (Fig. 2). Mit den Schneidplatten 7 wird jeweils ein Ölbund 12 und 13 am Übergang vom Kurbelwellenzapfen 9 zu den seitlichen Wangen bearbeitet und, wenn erforderlich, die Einstiche 10 und 11 eingearbeitet.

Nach den verschiedenen Drehbearbeitungen mit den Schneidplatten 3 bis 7 hat der Kurbelwellenzapfen 9 nahezu seine gewünschte Endform. Er wird nunmehr mit der Schneidplatte 8 noch im Schlichtverfahren durch Längsdrehen feinbearbeitet.

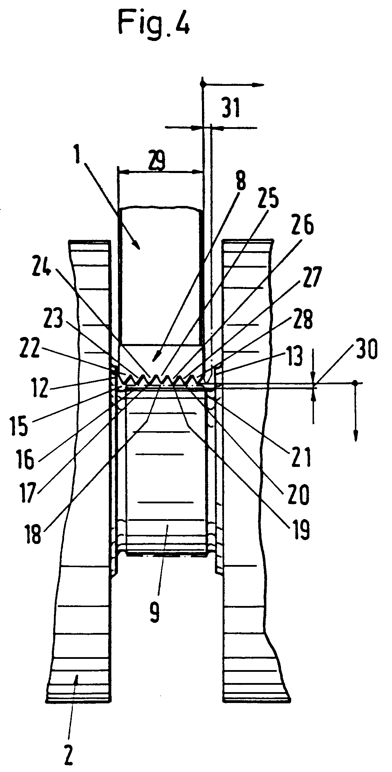

Wie Fig. 4 zeigt, hat die Schneidplatte 8 axial mit Abstand nebeneinander liegende Schneiden 22 bis 28, die in einer gemeinsamen Axialebene des Werkzeuges 1 liegen. Die Schneiden 22 bis 28 sind, quer zur Drehachse des Werkzeuges 1 gesehen, dreieckförmig ausgebildet und haben jeweils eine Schneidenspitze 15 bis 21. Die in Richtung auf die jeweilige Schneidkante konvergierenden Seitenflächen jeder Schneide 22 bis 28 sind jeweils als Freiflächen ausgebildet, d.h. sie verlaufen von der Brustfläche jeder Schneide aus schräg.

Wie Fig. 4 zeigt, ist die axiale Breite der Schneidplatte 8 kleiner als die Länge des zu bearbeitenden Kurbelwellenzapfens 9, gemessen zwischen den Ölbunden 12 und 13. Um nun die gesamte Umfangsfläche des Kurbelwellenzapfens 9 mit der Schneidplatte 8 schlichtbearbeiten zu können, wird das Werkzeug 1 mindestens einmal in Achsrichtung des Kurbelwellenzapfens 9 so bewegt, daß die Mantelfläche des Kurbelwellenzapfens durch die Schneiden 22 bis 28 über die axiale Länge geschlichtet wird.

Beim Schlichtvorgang, bei dem die Kurbelwelle 2 selbstverständlich mit Schnittgeschwindigkeit dreht, sind drei Bewegungen des Werkzeuges 1 möglich. So kann das Werkzeug 1 radial in Richtung auf die Kurbelwelle 2 in einer Zustellbewegung auf volle Tiefe zugestellt werden. Hierbei wird das Werkzeug 1 in der in Fig. 4 dargestellten Lage relativ zum Kurbelwellenzapfen 9 radial zugestellt. Anschließend wird das Werkzeug 1 aus der Stellung gemäß Fig. 4 axial nach rechts bewegt, so daß an der Mantelfläche des Kurbelwellenzapfens 9 durch die Schneiden 22 bis 28 der Schneidplatte 8 das Maß 30 abgetragen wird. Dieser Bearbeitungsschritt kann als Längsdrehen angesehen werden. Der Axialbewegungsweg des Werkzeuges 1 ist in Fig. 4 mit 31 bezeichnet. Dieser axiale Verstellweg ist etwas größer als der Abstand zwischen benachbarten Schneiden 22 bis 28, so daß sichergestellt ist, daß bei dieser axialen Verstellung die Mantelfläche des Kurbelwellenzapfens 9 vollständig bearbeitet wird. Da das Werkzeug 1 zunächst radial auf volle Tiefe zugestellt und dann nur einmal in Achsrichtung des Kurbelwellenzapfens 9 bewegt wird, kann diese Schlichtbearbeitung innerhalb kürzester Zeit durchgeführt werden. Allerdings ist die Belastung der Kurbelwelle 2 bei dieser Bearbeitungsmöglichkeit etwas höher als bei der folgenden zweiten Verfahrensweise.

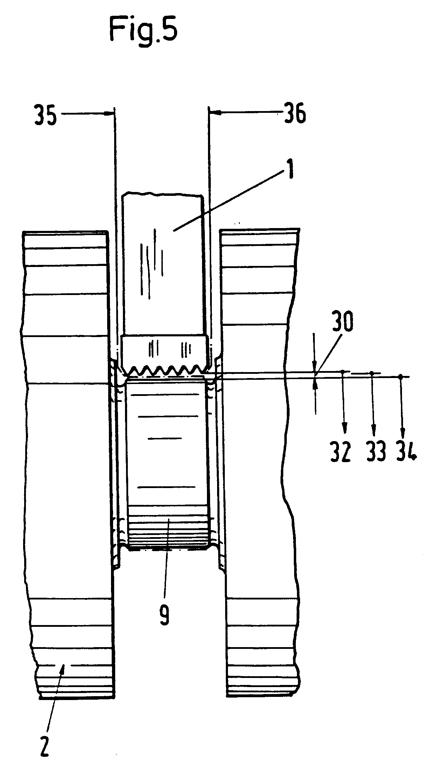

Bei ihr wird das Werkzeug 1 schrittweise radial zum Kurbelwellenzapfen 9 bis auf volle Tiefe zugestellt. Die verschiedenen radialen Zustellschritte 32 bis 34 sind in Fig. 5 angegeben. In Fig. 5 ist das Werkzeug 1 in einer axialen Zwischenstellung dargestellt. Nach jedem radialen Zustellschritt 32 bis 34 wird das Werkzeug 1 in Achsrichtung des Kurbelwellenzapfens 9 aus der Ausgangslage axial bewegt. Die beiden verschiedenen möglichen Ausgangslagen des Werkzeuges 1 sind in Fig. 5 mit 35 und 36 bezeichnet. In der Ausgangslage 35 wird das Werkzeug 1 nach der ersten Radialzustellung 32 in Fig. 5 nach rechts bis in die Endlage 36 verschoben, während die Kurbelwelle 2 dreht. Während dieser axialen Zustellung wird mit den Schneiden 22 bis 28 die Mantelfläche des Kurbelwellenzapfens 9 vollständig bearbeitet. Sobald die Endlage 36 erreicht ist, wird das Werkzeug 1 erneut radial zugestellt (Zustellung 33) und das Werkzeug 1 numehr in Fig. 5 nach links axial zugestellt. Bei diesem zweiten Schritt wird wiederum die Mantelfläche des Kurbelwellenzapfens 9 durch die Schneiden 22 bis 28 vollständig bearbeitet. Schließlich wird das Werkzeug 1, wenn es die Ausgangslage 35 wieder erreicht hat, radial zugestellt (Schritt 34) und dann wiederum in Fig. 5 nach rechts bis in die Endstellung 36 axial zugestellt. Mit den drei radialen Zustellschritten 32 bis 34 in Verbindung mit den jeweils anschließenden Längsdrehvorgängen wird wiederum am Kurbelwellenzapfen 9 das Maß 30 abgetragen. Da die radiale Zustellung auf die volle Tiefe in einzelnen Schritten erfolgt, wobei nach jedem radialen Zustellschritt der beschriebene Längsdrehvorgang erfolgt, wird die Kurbelwelle 2 während dieser Schlichtbearbeitung weniger belastet als bei der zuvor beschriebenen Verfahrensweise. Dafür wird allerdings etwas mehr Bearbeitungszeit benötigt. Abweichend vom dargestellten und beschriebenen Ausführungsbeispiel kann die Radialzustellung auch in mehr als drei oder auch nur in zwei Schritten erfolgen, je nach der Größe des abzutragenden Maßes 30 am Kurbelwellenzapfen 9.

Bei einer dritten Verfahrensweise für die Schlichtbearbeitung wird schließlich das Werkzeug 1 kontinuierlich radial zur drehenden Kurbelwelle 2 zugestellt. Dieser kontinuierlichen Radialzustellung wird eine hin- und hergehende Längsbewegung der Schneidplatte 8 überlagert. Ist das Maß 30 am Kurbelwellenzapfen 9 abgetragen, erfolgt wenigstens noch eine axiale Verstellung durch das Werkzeug 1. Vorzugsweise werden zur Erzielung einer hohen Bearbeitungsgenauigkeit noch mehrere solcher axialen Verstellungen durch das Werkzeug 1 vorgenommen. Die Kurbelwelle 2 wird während der Schlichtbearbeitung infolge des Materialabtrages 30 elastisch ausgebogen. Bei den abschließenden axialen Hin- und Herbewegungen des Werkzeuges 1 kann die Kurbelwelle 2 wieder in ihre Ausgangslage zurückfedern. Jetzt können bei den axialen Hin- und Herbewegungen des Werkzeuges 1 die Schneiden 22 bis 28 den Kurbelwellenzapfen 9 auf Endmaß bearbeiten. Dadurch wird eine sehr hohe Rundgenauigkeit des Kurbelwellenzapfens 9 erreicht.

Mit dem Werkzeug 1 können auch gehärtete Werkstücke geschlichtet werden.

Die Schneidplatte 8 kann aus allen bekannten Schneidwerkstoffen bestehen, insbesondere aus Hartmetall, aus beschichtetem Hartmetall, Keramik, Cermet, CBN und dgl.

Im dargestellten Ausführungsbeispiel ist das Werkzeug 1 scheibenförmig ausgebildet. Es besteht dadurch die Möglichkeit, am Umfang des Werkzeuges 1 mehrere Sätze der Schneidplatten 3 bis 8 vorzusehen, so daß mit einem solchen Werkzeug sehr lange gearbeitet werden kann. Für die ausschließliche Schlichtbearbeitung der Kurbelwelle 2 kann das Werkzeug auch als Einzweckwerkzeug ausgebildet sein, d.h. nur mit einer entsprechenden Zahl von gleichen Schlichtschneidplatten versehen sein.

Die Schneidplatte 8 hat im einfachsten Falle lediglich zwei Schneiden. Zweckmäßigerweise weist die Schneidplatte 8 mehrere Schneiden auf. Im dargestellten und beschriebenen Ausführungsbeispiel ist die Schneidplatte 8 mit sieben Schneiden 22 bis 28 versehen.

Bei längeren Wellenabschnitten ist es auch möglich, zwei Schneidplatten 8 nebeneinander am Werkzeug 1 vorzusehen, wobei jede Schneidplatte 8 in der beschriebenen Weise mit Abstand hintereinander liegende Schneiden aufweist. Die beiden Schneidplatten sind in diesem Fall versetzt hintereinander angeordnet, so daß zunächst mit der einen Schneidplatte und anschließend mit der anderen Schneidplatte nach entsprechender Verstellung des Werkzeuges 1 gearbeitet wird. Bei einer solchen Werkzeugausbildung kann die Zustellung des Werkzeuges 1 auf zwei verschiedene Weisen erfolgen. Wird das Werkzeug 1 radial zur Kurbelwelle 2 zugestellt, dann wird das Werkzeug jeweils mit jeder der beiden Schneidplatten axial hin- und herbewegt. In diesem Falle wirken sich aber Positionierfehler des Werkzeugschlittens bei der Bearbeitungsgenauigkeit aus. Solche Positionierfehler des Werkzeugschlittens führen dazu, daß der bearbeitete Kurbelwellenzapfen 9 im Arbeitsbereich der beiden Schneidplatten jeweils unterschiedlichen Durchmesser haben kann.

Solche Bearbeitungsungenauigkeiten können vermieden werden, wenn das Werkzeug 1 mit den beiden Schneidplatten 8 quer zur Achse der Kurbelwelle 2 bzw. des Kurbelwellenzapfens 9 eingeschwenkt wird. Mit der jeweiligen Schneidplatte 8 wird in der beschriebenen Weise eine axiale Hin- und Herbewegung durchgeführt, um den jeweiligen Umfangsbereich des Kurbelwellenzapfens 9 zu schlichten. Bei diesem Einschwenkvorgang tritt kein Positionierfehler auf, so daß die von den beiden Schneidplatten 8 bearbeiteten Bereiche der Mantelfläche des Kurbelwellenzapfens 9 exakt gleichen Durchmesser haben.

Die beiden Schneidplatten 8 sind so am Werkzeug 1 vorgesehen, daß sie einander überlappende Arbeitsbereiche haben, so daß der Kurbelwellenzapfen 9 über seine gesamte Breite bearbeitet wird.

Die Schneidplatte 8 des in den Fig. 1 bis 5 dargestellten Werkzeuges 1 ist so ausgebildet, daß in der Ausgangsstellung (Fig. 4) die eine endseitige Schneide 22 axial außerhalb der Mantelfläche des zu bearbeitenden Kurbelwellenzapfens 9 liegt, während die gegenüberliegende endseitige Schneide 28 auf der Mantelfläche des Kurbelwellenzapfens mit Abstand von deren benachbarter Stirnseite liegt (Fig. 4). Der axiale Verstellweg 31 des Werkzeuges 1 ist so groß, daß die Schneide 22 bei der Axialverstellung bis in den Arbeitsbereich der Schneide 23 gelangt, während die Schneide 28 bis über die entsprechende Stirnseite des Kurbelwellenzapfens 9 hinaus bewegt wird, wie dies durch eine strichpunktierte Linie in Fig. 4 dargestellt ist. Auf diese Weise ist sichergestellt, daß die Mantelfläche des Kurbelwellenzapfens 9 vollständig geschlichtet wird.

## Patentansprüche

1. Verfahren zur spanenden Bearbeitung rotationssymmetrischer Werkstückflächen, insbesondere von Kurbelwellen, bei dem die Werkstückfläche während der Bearbeitung rotiert und bei dem die Werkstückfläche zunächst grob bearbeitet und anschließend mittels einer Schneidplatte geschlichtet wird,
dadurch gekennzeichnet, daß die zu bearbeitende Werkstückfläche (9) bei der Schlichtbearbeitung durch eine aufgeteilte Schneidenanordnung (22 bis 28) der Schneidplatte (8) im Längsdrehverfahren bearbeitet wird, wobei das Werkzeug (1) bei der Schlichtbearbeitung radial zur Werkstückfläche (9) zugestellt und zum Längsdrehen mittels der Schneidplatte (8) in Achsrichtung der Werkstückfläche (9) bewegt wird.

2. Verfahren nach Anspruch 1,
dadurch gekennzeichnet, daß das Werkzeug (1) bei der Schlichtbearbeitung zunächst in einer Zustellbewegung auf volle Tiefe zugestellt wird, und daß anschließend das Werkzeug (1) zum Längsdrehen in Achsrichtung der Werkstückfläche (9) bewegt wird.

3. Verfahren nach Anspruch 1,
dadurch gekennzeichnet, daß das Werkzeug (1) bei der Schlichtbearbeitung in Stufen (32 bis 34) radial auf volle Tiefe zugestellt wird, und daß nach jedem Zustellschritt das Werkzeug (1) zum Längsdrehen in Achsrichtung der Werkstückfläche (9) bewegt wird.

4. Verfahren nach einem der Ansprüche 1 bis 3,
dadurch gekennzeichnet, daß die Schneidplatte (8) mit der aufgeteilten Schneidenanordnung (22 bis 28) zum Längsdrehen zumindest einmal, vorzugsweise mehrmals, in Achsrichtung der Werkstückfläche (9) hin- und herbewegt wird.

5. Verfahren nach Anspruch 1,
dadurch gekennzeichnet, daß das Werkzeug (1) mit der Schneidplatte (8) radial zur Werkstückfläche (9) zugestellt und mit der Schneidplatte (8) eine axiale Hin- und Herbewegung durchgeführt wird.

6. Verfahren zur spanenden Bearbeitung rotationssymmetrischer Werkstückflächen, insbesondere von Kurbelwellen, bei dem die Werkstückfläche während der Bearbeitung rotiert und bei dem die Werkstückfläche zunächst grob bearbeitet und anschließend mittels einer Schneidplatte geschlichtet wird,
dadurch gekennzeichnet, daß die zu bearbeitende Werkstückfläche (9) bei der Schlichtbearbeitung durch eine aufgeteilte Schneidenanordnung (22 bis 28) der Schneidplatte (8) im Längsdrehverfahren bearbeitet wird, wobei das Werkzeug (1) bei der Schlichtbearbeitung der Werkstückfläche (9) quer zu deren Drehachse eingeschwenkt und die Schneidplatte (8) axial hinund herbewegt wird.

7. Verfahren nach einem der Ansprüche 1 bis 6,
dadurch gekennzeichnet, daß die Werkstückfläche (9) zur Grobbearbeitung im Einstechdrehen bearbeitet wird.

8. Verfahren nach einem der Ansprüche 1 bis 6,
dadurch gekennzeichnet, daß die Werkstückfläche (9) zur Grobbearbeitung im Fräsverfahren bearbeitet wird.

9. Werkzeug zur Durchführung des Verfahrens nach einem der Ansprüche 1 bis 8, mit einem Werkzeuggrundkörper, auf dem mindestens eine Schneidplatte für die Grobbearbeitung und mindestens eine Schneidplatte für die Schlichtbearbeitung angeordnet sind,
dadurch gekennzeichnet, daß die Schlichtschneidplatte (8) wenigstens zwei axial mit Abstand nebeneinander liegende, der gleichen zu bearbeitenden Werkstückfläche zugeordnete Schneiden (22 bis 28) aufweist.

10. Werkzeug nach Anspruch 9,
dadurch gekennzeichnet, daß die Schneidkanten der Schneiden (22 bis 28) in einer gemeinsamen Ebene liegen.

11. Werkzeug nach Anspruch 9 oder 10,
dadurch gekennzeichnet, daß die Schlichtschneidplatte (8) eine Vielzahl von mit Abstand nebeneinander liegenden Schneiden (22 bis 28) aufweist, die jeweils etwa Dreieckform haben, wobei vorzugsweise die an die jeweilige Schneidkante der Schneiden (22 bis 28) anschließenden und von der Brustfläche ausgehenden Seitenflächen der Schneiden (22 bis 28) als Freiflächen ausgebildet sind.

12. Werkzeug nach einem der Ansprüche 9 bis 11,
dadurch gekennzeichnet, daß der Abstand der Schneiden (22 bis 28) voneinander kleiner ist als der axiale Verstellweg des Werkzeuges (1) bei der Schlichtbearbeitung.

13. Werkzeug nach einem der Ansprüche 9 bis 12,
dadurch gekennzeichnet, daß das Werkzeug (1) zwei nebeneinander angeordnete Schlichtschneidplatten (8) aufweist, die jeweils mindestens zwei mit axialem Abstand nebeneinander liegende Schneiden (22 bis 28) haben und vorzugsweise versetzt hintereinander liegen.

14. Werkzeug nach Anspruch 13,
dadurch gekennzeichnet, daß die beiden Schlichtschneidplatten (8) einander überlappende Arbeitsbereiche haben.

15. Werkzeug nach einem der Ansprüche 9 bis 14,
dadurch gekennzeichnet, daß das Werkzeug (1) scheibenförmig ausgebildet ist und am Umfang die Schlichtschneidplatte (8) aufweist und vorzugsweise am Umfang des scheibenförmigen Werkzeuges (1) mit weiteren Schneidplatten (3 bis 6) zur Grobbearbeitung versehen ist.

16. Werkzeug nach Anspruch 15,
dadurch gekennzeichnet, daß am Umfang des Werkzeuges (1) mehrere Sätze von Schneidplatten (3 bis 8) angeordnet sind.

## Claims

1. A process for chip-removing machining of rotationally symmetrical workpiece surfaces, in particular those of crankshafts, in which process the workpiece surface is rotated during machining and is firstly machined roughly and subsequently finished by a bit,
**characterised in that** the workpiece surface (9) to be machined is machined during finishing machining by a divided cutter arrangement (22 to 28) of the bit (8) in the cylindrical turning process, wherein during the finishing machining the tool (1) is advanced radially with respect to the workpiece surface (9), and is moved for cylindrical turning by means of the bit (8) in the direction of the axis of the workpiece surface (9).

2. A process according to Claim 1,
**characterised in that** during finishing machining first of all the tool (1) is advanced to full depth in a feed movement, and that the tool (1) is subsequently moved for cylindrical turning in the direction of the axis of the workpiece surface (9).

3. A process according to Claim 1,
**characterised in that** during finishing machining the tool (1) is advanced to full depth in steps (32 to 34) radially, and that after each feed step the tool (1) is moved for cylindrical turning in the direction of the axis of the workpiece surface (9).

4. A process according to any one of Claims 1 to 3,
**characterised in that** the bit (8) with the divided cutter arrangement (22 to 28) is moved backward and forward for cylindrical turning at least one, preferably several times, in the direction of the axis of the workpiece surface (9).

5. A process according to Claim 1,
**characterised in that** the tool (1) with the bit (8) is advanced radially with respect to the workpiece surface (9) and an axial forward and backward movement is made using the bit (8).

6. A process for chip-removing machining of rotationally symmetrical workpiece surfaces, in particular those of crankshafts, in which process the workpiece surface is rotated during machining and is firstly machined roughly and subsequently finished using a bit,
**characterised in that** the workpiece surface (9) to be machined is machined during the finishing machining by a divided cutter arrangement (22 to 28) of the bit (8) in the cylindrical turning direction, wherein the workpiece (1) is pivoted during finishing machining of the workpiece surface (9) transversely to the axis of rotation thereof, and the bit is moved axially backward and forward.

7. A process according to any one of Claims 1 to 6, **characterised in that** the workpiece surface (9) is machined for rough machining during recessing.

8. A process according to any one of Claims 1 to 6, **characterised in that** the workpiece surface (9) is machined for rough machining during milling.

9. A tool for implementing the process according to any one of Claims 1 to 8, with a basic tool structure, on which at least one bit for rough machining and at least one bit for finishing machining are arranged, **characterised in that** the finishing bit (8) has at least two cutters (22 to 28) associated with the same workpiece surface to be machined and spaced axially adjacent each other.

10. A tool according to Claim 9.
**characterised in that** the cutting edges of the cutters (22 to 28) are in a common plane.

11. A tool according to Claim 9 or 10,
**characterised in that** the finishing bit (8) has a plurality of cutters (22 to 28) spaced adjacent each other, which are each substantially triangular-shaped, wherein preferably the cutter (22 to 28) bezels extending from the lip face and connected to the respective cutting edge of the cutters (22 to 28) are in the form of flanks.

12. A tool according to any one of Claims 9 to 11,
**characterised in that** the distance of the cutters (22 to 28) from each other is smaller than the axial adjustment path of the tool (1) during finishing machining.

13. A tool according to any one of Claims 9 to 12,
**characterised in that** the tool (1) has two finishing bits (8) adjacent each other which each have at least two cutters (22 to 28) spaced axially adjacent each other, and which are preferably staggered one behind the other.

14. A tool according to Claim 13,
**characterised in that** the two finishing bits (8) have overlapping machining ranges.

15. A tool according to any one of Claims 9 to 14,
**characterised in that** the tool (1) is in the form of a disc and has the finishing bit (8) on the periphery, and is preferably provided with further bits (3 to 6) for rough machining on the periphery of the disc-shaped tool (1).

16. A tool according to Claim 15,
**characterised in that** several sets of bits (3 to 8) are arranged on the periphery of the tool (1).

## Revendications

1. Procédé pour l'usinage par enlèvement de copeaux de surfaces de pièces de révolution, en particulier de vilebrequins, dans lequel la surface de la pièce tourne pendant l'usinage et dans lequel la surface de la pièce est tout d'abord dégrossie, puis finie au moyen d'une plaquette de coupe,
caractérisé en ce que, lors de l'usinage de finition, la surface à usiner (9) de la pièce est usinée par un dispositif de dents distinctes (22 à 28) de la plaquette de coupe dans le procède de chariotage longitudinal dans lequel l'outil (1) est avancé radialement vers la surface (9) de la pièce lors de l'usinage de rectification et entraîné dans une direction parallèle à l'axe de la surface (9) de la pièce pour l'exécution du chariotage longitudinal au moyen de la plaquette de coupe (8).

2. Procédé selon la revendication 1,
caractérisé en ce que, lors de l'usinage de finition, l'outil (1) est tout d'abord avancé à la profondeur maximale dans un mouvement d'avance et en ce que l'outil (1) est ensuite entraîné en mouvement parallèle à l'axe de la surface (9) de la pièce pour l'exécution du chariotage longitudinal.

3. Procédé selon la revendication 1,
caractérisé en ce que, lors de l'usinage de finition, l'outil (1) est avancé radialement jusqu'à la profondeur maximale par pas successifs (32 à 34) et qu'après chaque pas d'avance, l'outil (1) est entraîné en mouvement parallèle à l'axe de la surface (9) de la pièce pour le chariotage longitudinal.

4. Procédé selon une des revendications 1 à 3,
caractérisé en ce que, pour le chariotage longitudinal, la plaquette de coupe (8) munie du dispositif de dents distinctes (22 à 28) est entraînée en mouvement alternatif au moins une fois, et de préférence plusieurs fois, parallèlement à l'axe (9) de la pièce.

5. Procédé selon la revendication 1,
caractérisé en ce que l'outil (1) muni de la plaquette de coupe (8) est avancé radialement par rapport à la surface (9) de la pièce et qu'un mouvement axial alternatif est exécuté avec la plaquette de coupe (8).

6. Procédé pour l'usinage par enlèvement de copeaux de surfaces de pièces de révolution, en particulier de vilebrequins, dans lequel la surface de la pièce tourne pendant l'usinage et dans lequel la surface de la pièce est tout d'abord dégrossie, puis finie au moyen d'une plaquette de coupe,
caractérisé en ce que, lors de l'usinage de finition, la surface à usiner (9) de la pièce est usinée par un dispositif de dents distinctes (22 à 28) de la plaquette de coupe (8) dans le procédé de chariotage longitudinal dans lequel, lors de l'usinage de finition de la surface (9) de la pièce, l'outil (1) est basculé transversalement à l'axe de rotation de la pièce et la plaquette de coupe (8) est entraînée en mouvement axial alternatif.

7. Procédé selon une des revendications 1 à 6,
caractérisé en ce que, pour le dégrossissage, la surface (9) de la pièce est usinée par tournage en plongée.

8. Procédé selon une des revendications 1 à 6,
caractérisé en ce que, pour le dégrossissage, la surface (9) de la pièce est usinée par un procédé de fraisage.

9. Outil pour la mise en oeuvre du procédé selon une des revendications 1 à 8, possédant un corps de base d'outil sur lequel sont agencées au moins une plaquette de coupe pour le dégrossissage et au moins une plaque de coupe pour l'usinage de finition,
caractérisé en ce que la plaquette de coupe de finition (8) présente au moins deux dents (22 à 28) juxtaposées axialement à un certain écartement, associées à la même surface à usiner de la pièce.

10. Outil selon la revendication 9,
caractérisé en ce que les arêtes tranchantes dents (22 à 28) se trouvent dans un même plan.

11. Outil selon la revendication 9 ou 10,
caractérisé en ce que la plaque de coupe de finition (8) présente plusieurs dents (22 à 28) juxtaposées à un certain écartement, qui ont une forme à peu près triangulaire, les surfaces latérales des dents (22 à 28) qui se raccordent à l'arête tranchante considérée des dents (22 à 28) et qui partent de la surface frontale forment des surfaces en dépouille

12. Outil selon une des revendications 9 à 11,
caractérisé en ce que l'écartement mutuel des dents (22 à 28) est inférieur à la course de déplacement axial de l'outil (1) dans l'usinage de finition.

13. Outil selon une des revendications 9 à 12,
caractérisé en ce que l'outil (1) présente deux plaquettes de coupe de finition (8) juxtaposées qui ont au moins deux dents (22 à 28) juxtaposées à un certain écartement axial et qui sont de préférence décalées l'une derrière l'autre.

14. Outil selon la revendication 13,
caractérisé en ce que les deux plaquettes de coupe de finition (8) ont des plages de travail qui se recouvrent mutuellement.

15. Outil selon une des revendications 9 à 14,
caractérisé en ce que l'outil (1) est en forme de disque et présente la plaquette de coupe de finition (8) sur la circonférence et est muni de préférence, sur la circonférence de l'outil (1) en forme de disque, d'autres plaquettes de coupe (3 à 6) pour le dégrossissage.

16. Outil selon la revendication 15,
caractérisé en ce que plusieurs jeux de plaquettes de coupe (3 à 8) sont disposés le long de la circonférence de l'outil (1).
